Europäisches Patentamt

European Patent Office

Office européen des brevets

(11) Publication number: 0 372 085 A1

(12) EUROPEAN PATENT APPLICATION
published in accordance with Art. 158(3) EPC

(21) Application number: 89905165.0

(22) Date of filing: 02.05.89

(86) International application number: PCT/JP89/00467

(87) International publication number: WO 89/11119 (16.11.89 89/27)

(51) Int. Cl.5: G05B 19/04

(30) Priority: 10.05.88 JP 113071/88

(43) Date of publication of application: 13.06.90 Bulletin 90/24

(84) Designated Contracting States: DE FR GB

(71) Applicant: FANUC LTD
3580, Shibokusa Aza-Komanba Oshino-mura Minamitsuru-gun Yamanashi 401-05(JP)

(72) Inventor: TANAKA, Kunio
5-8-13, Tamagawa-cho
Akishima-shi Tokyo 196(JP)
Inventor: MAEDA, Kimio
52-2-103, Matsugaya
Hachioji-shi Tokyo 192-03(JP)

(74) Representative: Billington, Lawrence Emlyn
HASELTINE LAKE & CO Hazlitt House 28
Southampton Buildings Chancery Lane
London WC2A 1AT(GB)

(54) PMC APPARATUS.

(57) Each I/O unit ($12_{ij}$) monitors a connection state representing which input/output module ($MJ_m$) is fitted into which slot ($SL_k$) and an overall connection state representing which input/output module is fitted into which slot of which I/O unit is monitored on the basis of the connection state which is monitored by each I/O unit. This overall connection state is displayed or printed out, whenever necessary.

FIG.1

## DESCRIPTION

## PMC APPARATUS

### Technical Field

This invention relates to a programmable controller (PMC apparatus) and, more particularly, to a PMC apparatus capable of outputting the status of a connection between the control main body of the PMC apparatus and an external apparatus.

### Background Art

In a numerical control system, various machine elements of a machine tool are controlled based on a command from an NC unit. Control for exchange of signals between the side of the NC unit and the machine tool is executed, based on a sequence program, by a programmable controller (PMC apparatus) provided on the side of the NC unit. Specifically, the PMC apparatus repeatedly executes the sequence program at a predetermined period, performs an exchange of input/output signals between the NC unit and machine sides whenever one cycle of processing ends, and executes sequence processing based on the new signal status in the next cycle.

The sequence program is obtained by logically programming, in the form of instructions and operands, the function of a magnetics circuit which supervises an exchange of data between the side of the NC unit and the machine tool. The program is composed of pneumonic codes. Examples of the instructions are RD (a read instruction), AND (a logical product instruction), WRT (a write instruction), OR (a logical sum instruction), AND·NOT (an instruction for a logical product with the NOT of a value), and OR·NOT (an instruction for a logical sum with the NOT of a value). The operands correspond to relay contacts and coils in a ladder diagram, by way of example, and addresses of a memory at which one-bit logic ("1"/"0") indicating the on/off states of these contacts or coils is stored are used as the operands.

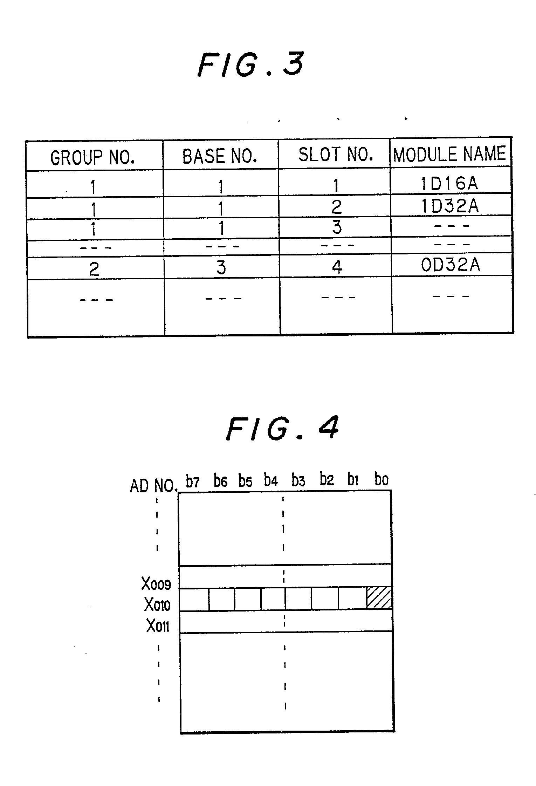

As shown in Fig. 4, the addresses are composed of an address number $AD_{NO.}$ (every eight points of a signal) and a bit number $b_i$ ($b = 0 - 7$). The address number is expressed by an alphabetic character and a three-digit numeric value following the character. The address number is X in a case where an input signal is sent from the machine side to the PMC apparatus, and Y in a case where an output signal is sent from the PMC apparatus to the machine side. For example, therefore, an address "X010.0" signifies the first bit of a memory address X010 (see the shaded portion in Fig. 4). The logic value (on/off) of a predetermined signal from the machine side is stored at this bit.

The PMC apparatus is provided with a number of I/O interfaces (I/O units) having a plurality of slots which accommodate modules for signal exchange. A predetermined number of I/O interfaces constitute one group, and each group is assigned a group number, which begins from number 0. The I/O interfaces constituting each group are assigned base numbers, which start from the number 0. The slot of each I/O interface is assigned a slot number, the first of which is number 0. The input/output modules include those in which the number of input/outputs is one byte (eight points), two bytes, four bytes and eight bytes. Each of these modules is assigned a module name.

The machine interconnection arrangement of such a PMC apparatus is decided upon taking into consideration the number of input/output signal points, and it is necessary to set, at the time of sequence program creation, what signals are to be outputted from which terminals (ports) of which modules of which I/O interfaces of which group, or what signals are received. (This is referred to as address setting.)

Conventionally, input/output module address setting at the time of sequence program creation is performed as follows:

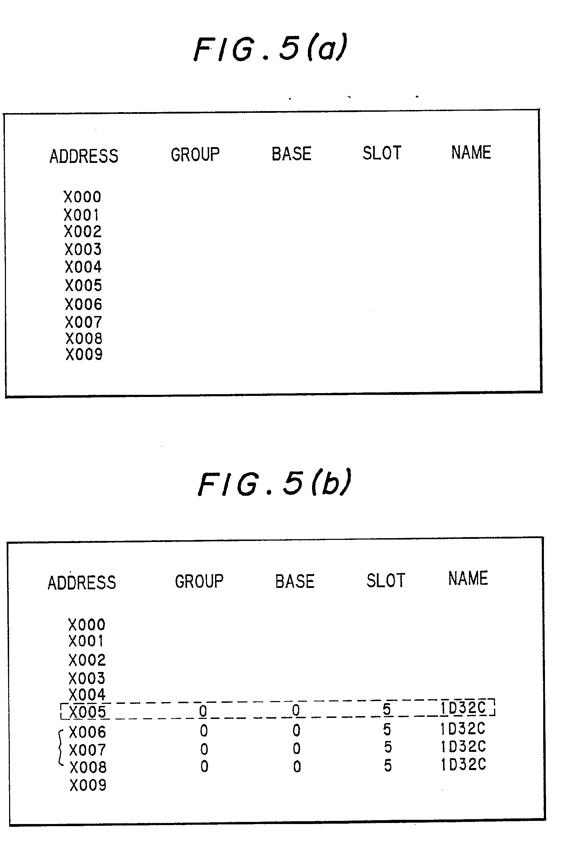

(i)  As shown in Fig. 5(a), an "address setting screen" is displayed on a display unit;

(ii)  a cursor is placed at the address desired to be set (it is possible to display desired addresses by turning pages);

(iii)  group number, base number, slot number and terminal name are subsequently entered in order; and

(iv)  the operations of steps (ii) - (iii) are repeated.

Address setting for all modules is thus carried out. The number of input/output points (the number of bytes) of each module is recognized by the system. Therefore, if the address of the leading byte of each module is decided, the addresses of the other bytes in the modules are set automatically. Fig. 5(b) shows a case in which the address number of the leading byte (eight points) of an input module (module name: ID32C) whose number of input/output points is 32 (four bytes) is set to X005. Here the addresses of the remaining three bytes are set automatically to X006, X007, X008. As a result, the number stored at the first of the memory address "X005" is inputted from the first port of the input module ID32C inserted in the fifth slot of the 0th base in the 0th group.

Thus, as set forth above, address setting is performed by first comprehending the connection status indicating in which slot of which I/O interface in which group each module is inserted, and then making the setting by the address setting screen.

However, in the prior art, any address can be set for any port of any module without relation to the actual connection status, and the actual connection status is merely comprehended by visual verification. Consequently, there are instances where an address setting is made upon mistaking the connection status, as a result of which the system program will not operate normally.

Accordingly, an object of the present invention is to provide a PMC apparatus in which the connection status can be comprehended accurately without relying upon visual verification, and in which an erroneous setting can be sensed if one should occur.

Disclosure of the Invention

A connection state which indicates which input/output modules are inserted into which slots is managed for each I/O unit. Based on connection status data managed at each I/O unit, the control main body of a PMC apparatus manages the overall connection status and displays the overall connection status as necessary. When a setting different from the actual connection status is made at the time of address setting, the address setting is not carried out.

Brief Description of the Drawings

Fig. 1 is a principal block diagram of a PMC apparatus according to the present invention;

Fig. 2(a) is a block diagram of an input module;

Fig. 2(b) is a block diagram of an output module;

Fig. 3 is a view for describing connection status data;

Fig. 4 is a view for describing addresses; and

Fig. 5 is a view for describing address setting.

Best Mode for Carrying Out the Invention

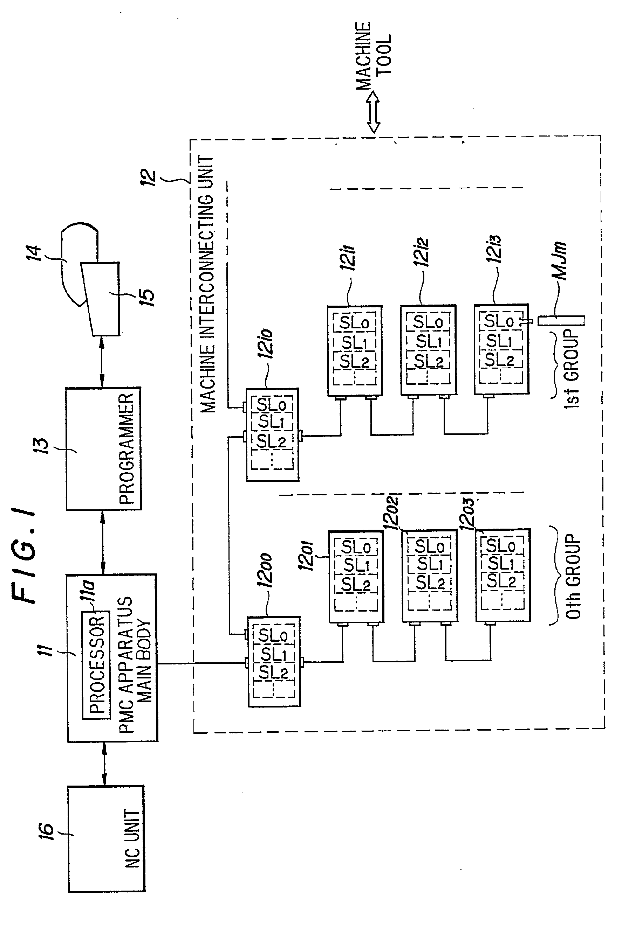

Fig. 1 is a principal block diagram of a PMC apparatus according to the present invention.

Numeral 11 denotes the control main body of a PMC apparatus, 12 a machine interconnection unit, 13 a programmer, 14 a display unit, 15 a keyboard, and 16 an NC unit.

In the machine interconnection unit 12, numeral $12_{ij}$ ($i = 1, 3, \cdots$; $j = 1, 2, \cdots$) denotes an I/O interface (I/O unit), $SL_k$ ($k = 0, 1, \cdots$) denotes a slot, and $MJ_m$ denotes an input/output module.

A predetermined number (e.g., four) of the I/O units $12_{ij}$ construct one group, each of which is assigned a group number, which starts from number 0. Each I/O unit constituting a group is assigned a base number that starts from number 0, each I/O unit is provided with a plurality of slots $SL_k$ ($k = 0, 1, \cdots$) for input/output module insertion, and each slot is assigned a slot number that starts from number 0. The first suffix of the I/O unit 12ij indicates the group number, and the second suffix indicates the base number. The slot number is indicated by the suffix k of the slot $SL_k$.

The input/output modules include those in which the number of input/output points is one byte (eight points), two bytes, four bytes and eight bytes. Each of these modules is assigned a module name.

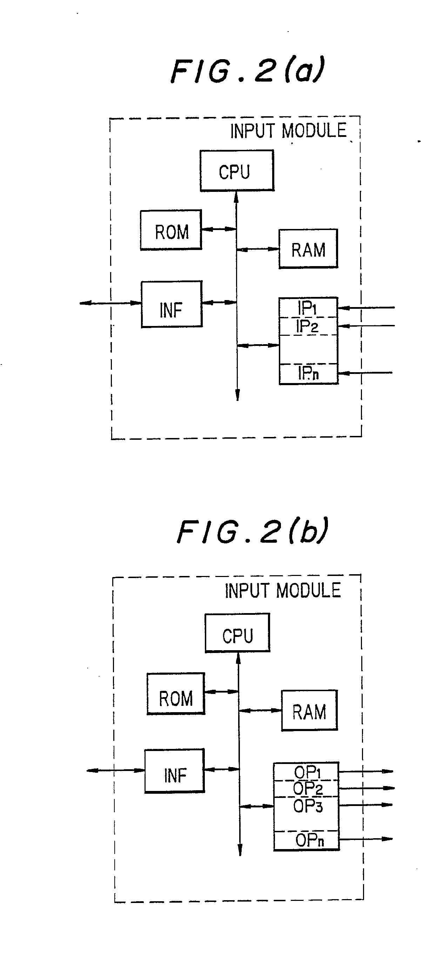

Each input/output module and I/O unit is constituted by a computer and is capable of a mutual data exchange. Among these input/output modules, each input module is constituted by a processor CPU, ROM, RAM, input ports $IP_n$ of a plurality of points, and an interface circuit INF for interfacing a host processor (I/O unit), as shown in Fig. 2(a). Each output module is constituted by a processor CPU, ROM, RAM, output ports $OP_n$ of a plurality of points, and an interface circuit INF for interfacing a host processor, as shown in Fig. 2(b). The ROM of each module stored the name of the module. If the module is an input module, examples of modules names are ID08A, ID16A, ID32A, ID64A, ID08A, ID16B, etc. If the module in an output port, examples of modules names are OD32A, OD64A, OD08A, OD16B, etc. (ID indicates an input module and OD an output module, and the numeric values 8, 16, 32, 64 indicate the number of input/output points.)

When a predetermined module $MJ_m$ is inserted into slot $SL_k$ of a predetermined I/O unit $12_{ij}$, the module $MJ_m$ informs the processor of the I/O unit of its own name. As a result, the I/O unit $12_{ij}$ is capable of recognizing the connection status (slot numbers, module names) indicating which modules are inserted into all of its slots and manages this connection status.

Each I/O unit $12_{ij}$ informs the processor of the leading I/O unit $12_{i0}$ (base number "0") of its base number and the connection status which it iself is managing. As a result, the leading I/O unit $12_{i0}$ of each group manages the connection-related data (base numbers, slot numbers, module names) of the entire group.

The leading I/O unit $12_{i0}$ of each group informs the processor 11a of the PMC apparatus main body 11 of the group number and the overall connection status of the group which it iself is managing. As a result, the PMC apparatus 11 creates the overall machine interconnection status data (group numbers, base numbers, slot numbers, module names), as shown in Fig. 3, and manages this data.

Accordingly, in a case where address setting is performed at the time of sequence program creation by the programmer 13, the overall machine interconnection status data (Fig. 3) is displayed on the display unit 14 or printed out, and address setting is performed by referring to this interconnection status data.

When a setting which differs from the actual connection status is performed owing to a mistake made at the time of address setting, this is sensed and the erroneous address setting is not carried out. In addition, a display is presented to the effect that the set data is erroneous.

In accordance with the present invention as set forth above, machine interconnection status data is managed by a PMC apparatus and this data is outputted as desired. As a result, the machine interconnection status can be accurately comprehended so that erroneous address settings are no longer made. In addition, even if an address setting different from the actual connection status is made, this error can be sensed by the system.

CLAIMS:

1. A PMC apparatus in which several input/output modules each having a plurality of input/output ports are inserted into predetermined slots of a predetermined I/O unit and input/output data are exchanged between a control main body and an external unit via each of the input/output modules, comprising:

connection status managing means for managing a connection status indicating which input/output modules are inserted into which slots for each and every I/O unit;

overall connection status managing means for managing overall connection status indicating which input/output modules are inserted into which slots of which I/O units based on the connection status managed by the connection status management means of each I/O unit; and

an output unit for displaying or printing out said overall connection status.

2. A PMC apparatus according to claim 1, characterized in that each input/output module has connection status managing means, a processor adapted so as to be capable of exchanging data, and a number of input/output ports, the connection status managing means of the I/O unit receiving a module name from the processor of the input/output module inserted into a slot, and managing the connection status of each and every I/O unit.

3. A PMC apparatus according to claim 1, characterized in that several I/O units constitute a group, there is provided group connection status managing means for each and every group for managing a connection status which indicates which input/output module are inserted into which slots of which I/O unit, and the overall connection status managing means manages the overall connection status upon receiving the connection status of groups from the connection status managing means of each group.

FIG.1

# FIG. 2 (a)

# FIG. 2 (b)

# FIG.3

| GROUP NO. | BASE NO. | SLOT NO. | MODULE NAME |
|-----------|----------|----------|-------------|
| 1 | 1 | 1 | 1D16A |
| 1 | 1 | 2 | 1D32A |
| 1 | 1 | 3 | - - - |
| - - - | - - - | - - - | - - - |
| 2 | 3 | 4 | OD32A |
| - - - | - - - | - - - | - - - |

# FIG.4

# FIG.5(a)

| ADDRESS | GROUP | BASE | SLOT | NAME |
|---------|-------|------|------|------|
| X000 | | | | |
| X001 | | | | |
| X002 | | | | |
| X003 | | | | |
| X004 | | | | |
| X005 | | | | |
| X006 | | | | |
| X007 | | | | |
| X008 | | | | |
| X009 | | | | |

# FIG.5(b)

| ADDRESS | GROUP | BASE | SLOT | NAME |
|---------|-------|------|------|------|
| X000 | | | | |
| X001 | | | | |
| X002 | | | | |
| X003 | | | | |
| X004 | | | | |
| X005 | 0 | 0 | 5 | 1D32C |
| X006 | 0 | 0 | 5 | 1D32C |
| X007 | 0 | 0 | 5 | 1D32C |
| X008 | 0 | 0 | 5 | 1D32C |
| X009 | | | | |

# INTERNATIONAL SEARCH REPORT

International Application No   PCT/JP89/00467

## I. CLASSIFICATION OF SUBJECT MATTER (if several classification symbols apply, indicate all) 6

According to International Patent Classification (IPC) or to both National Classification and IPC

Int. Cl⁴
G05B19/04

## II. FIELDS SEARCHED

### Minimum Documentation Searched 7

| Classification System | Classification Symbols |
|---|---|
| IPC | G05B19/04 |

### Documentation Searched other than Minimum Documentation to the Extent that such Documents are Included in the Fields Searched 8

| | |
|---|---|
| Jitsuyo Shinan Koho | 1932 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 57-98007 (Omron Tateisi Electronics Co.) 18 June 1982 (18. 06. 82) (Family : none) | 1 - 3 |
| Y | JP, A, 61-195408 (Matsushita Electric Works, Ltd.) 29 August 1986 (29. 08. 86) (Family : none) | 1 - 3 |
| A | JP, A, 61-10340 (General Electric Co.) 17 January 1986 (17. 01. 86) & DE, A, 3519862 & GB, A, 2159981 & FR, A, 2565376 & CA, A, 1248639 | 1 - 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 20, 1989 (20. 07. 89) | August 7, 1989 (07. 08. 89) |

| International Searching Authority | Signature of Authorized Officer |
|---|---|
| Japanese Patent Office | |

Form PCT ISA-210 (second sheet) (January 1985)